# EUROPÄISCHE PATENTSCHRIFT

(11) **EP 3 956 970 B1**
(45) Veröffentlichungstag und Bekanntmachung des Hinweises auf die Patenterteilung: **15.10.2025**
(21) Anmeldenummer: 20728971.1
(22) Anmeldetag: 13.05.2020
(51) Int. Cl.: H02K 7/108, H02K 11/21, H02K 5/15

(54) **ELEKTROMOTOR UND SCHIENENFAHRZEUG**
ELECTRIC MOTOR AND RAIL VEHICLE
MOTEUR ÉLECTRIQUE ET VÉHICULE FERROVIAIRE

(30) Priorität: 31.05.2019 DE 102019208001
(43) Veröffentlichungstag der Anmeldung: 23.02.2022
(73) Patentinhaber: Siemens Mobility GmbH, 80997 München (DE)
(72) Erfinder: ADAM, Christoph, 90411 Nürnberg (DE); SEITZ, Peter, 91224 Pommelsbrunn (DE)
(74) Vertreter: Siemens Patent Attorneys
(86) Internationale Anmeldenummer: PCT/EP2020/063254
(87) Internationale Veröffentlichungsnummer: WO 2020/239439

(56) Entgegenhaltungen:
- EP-A1- 0 582 563
- EP-A1- 3 226 382
- DE-A1- 102017 129 269

## Beschreibung

Die Erfindung betrifft einen Elektromotor für ein Schienenfahrzeug mit einem Drehzahlgeber. Der Elektromotor ist insbesondere zum Antrieb des Schienenfahrzeugs vorgesehen. Die Erfindung betrifft weiterhin ein Schienenfahrzeug.

Zur Regelung eines Elektromotors können beispielsweise Lagegeber oder Drehzahlgeber eingesetzt werden. Aus DE 10 2017 129269 A1 ist so ein Elektromotor bekannt. Bei Schienenfahrzeugen werden insbesondere Drehzahlgeber eingesetzt. Ein Drehzahlgeber tastet zum Beispiel die Zähne eines Geberrads ab, das mit dem Rotor des Elektromotors verbunden ist. Auf diese Weise können die Drehzahl, die Winkellage und/oder die Drehrichtung des Rotors sowie daraus ableitbare Größen bestimmt werden.

Eine Aufgabe gemäß zumindest einem Aspekt der Erfindung besteht darin, einen Elektromotor für ein Schienenfahrzeug angeben, bei dem die Komponenten zur Regelung des Elektromotors platzsparend angeordnet sind. Weiterhin soll ein Schienenfahrzeug mit einem platzsparenden Elektromotor angegeben werden.

Diese Aufgaben werden durch einen Elektromotor mit den Merkmalen des Anspruchs 1 bzw. ein Schienenfahrzeug mit den Merkmalen des Anspruchs 10 gelöst. Vorteilhafte Ausgestaltungen und Weiterbildungen der Erfindung sind Gegenstand der abhängigen Ansprüche.

Der Elektromotor weist einen Drehzahlgeber auf, wobei der Drehzahlgeber an einem Lagerschild des Elektromotors montiert ist. Weiterhin ist ein Geberrad für den Drehzahlgeber an einer Kupplung des Elektromotors montiert. Die Integration des Geberrads in die Kupplung ist vorteilhaft, um Kosten und Gewicht zu sparen. Insbesondere wird für das Geberrad durch die Anordnung an der Kupplung kein zusätzlicher Bauraum in axialer Richtung, d.h. in der Richtung der Rotorwelle, benötigt. Dies ist insbesondere für einen Elektromotor in einem Schienenfahrzeug vorteilhaft, da der Elektromotor in einem Drehgestell angeordnet wird, in dem der Platz begrenzt ist. Der Elektromotor kann insbesondere quer zur Fahrtrichtung parallel zur Radsatzwelle in dem Drehgestell montiert sein.

Der Elektromotor ist insbesondere zum Antrieb eines Schienenfahrzeugs vorgesehen. Die Kupplung ist dazu vorgesehen, eine Rotorwelle des Elektromotors mit einer Radsatzwelle oder einer Getriebeeingangswelle des Schienenfahrzeugs zu verbinden. Die Kupplung kann sich bei einem getriebelosen Antrieb zwischen Motor und Radsatzwelle befinden oder bei einem Antrieb mit Getriebe zwischen Motor und Getriebe befinden. Die Kupplung kann eine Relativbewegung zwischen Motorwelle und Radsatzwelle bzw. Getriebewelle ausgleichen. Die Kupplung kann insbesondere eine Bogenzahnkupplung sein.

Der mindestens eine Drehzahlgeber ist dazu eingerichtet, die Drehzahl der Rotorwelle zu bestimmen. Weiterhin ist es möglich, dass der Drehzahlgeber oder ein weiterer Drehzahlgeber beispielsweise die Winkellage und/oder die Drehrichtung des Rotors bestimmt. Eine oder mehrere dieser Messgrößen können beispielsweise von einer Steuereinheit zur Regelung des Elektromotors verarbeitet werden. Zur Ermittlung der Drehzahl, der Winkellage und/oder der Drehrichtung des Rotors ist der Drehzahlgeber dazu eingerichtet, die Zähne eines Geberrads abzutasten, das mit dem Rotor verbunden ist.

Gemäß einer Ausführungsform des Elektromotors ist der Drehzahlgeber an einer Außenseite eines Lagerschilds des Elektromotors montiert. Das Lagerschild begrenzt ein Gehäuse des Elektromotors nach außen. Das Lagerschild bildet insbesondere in axialer Richtung, d.h. in Richtung der Rotorwelle, gesehen, eine Abschlusswand des Gehäuses. Der Drehzahlgeber ist von außen an dem Lagerschild montiert, also insbesondere nicht innerhalb des Gehäuses des Elektromotors. Die Montage des Drehzahlgebers an einer Außenseite des Lagerschilds hat insbesondere den Vorteil, dass der Drehzahlgeber nicht der Wärme im Inneren des Elektromotors ausgesetzt ist, sondern im kühleren Außenbereich angeordnet ist. Da beim Betrieb eines Elektromotors zum Antrieb eines Schienenfahrzeugs aufgrund der vergleichsweise hohen Leistung eine erhebliche Wärme entsteht, ist diese Einbauposition für einen Elektromotor eines Schienenfahrzeugs besonders vorteilhaft. Außerdem ist der Drehzahlgeber bei der Montage an dem Lagerschild gut vor Steinschlag geschützt.

Gemäß zumindest einer Ausführungsform ist das Lagerschild, an dem der Drehzahlgeber montiert ist, das antriebsseitige Lagerschild. Das antriebsseitige Lagerschild begrenzt das Gehäuse des Elektromotors an der Antriebseite, an der die Kupplung zur Radsatzwelle angeordnet ist. Die Anordnung des Drehzahlgebers an der Antriebsseite ist insbesondere bei einem Elektromotor vorteilhaft, der keinen Lüfter aufweist, an dem ein Geberrad angebracht werden könnte.

Gemäß zumindest einer Ausführungsform ist der Drehzahlgeber an einem Gewindesackloch des Lagerschilds befestigt. Bei dieser Ausgestaltung sind vorteilhaft keine Durchgangsbohrungen im Lagerschild oder Motorgehäuse notwendig, um den Drehzahlgeber zu befestigen. Zur Befestigung des Drehzahlgebers an dem Gewindesackloch kann beispielsweise ein Adapter verwendet werden, der den Drehzahlgeber aufnimmt und in das Gewindesackloch geschraubt wird.

Gemäß zumindest einer Ausführungsform weist der Elektromotor mehrere an dem Lagerschild montierte Drehzahlgeber auf. Die Montage am Lagerschild bietet vorteilhaft die Möglichkeit, platzsparend mehrere Drehzahlgeber anzuordnen, die das gleiche Geberrad abtasten. Die mehreren Drehzahlgeber können vorteilhaft Signalgeber für verschiedene Steuerungsfunktionen sein, zum Beispiel Antriebssteuerung, Bremssteuerung oder Stillstanderkennung.

Gemäß zumindest einer Ausführungsform sind, die mehreren Drehzahlgeber jeweils an einem Gewindesackloch des Lagerschilds befestigt, beispielsweise mit Adaptern, die in die Gewindesacklöcher geschraubt werden. Die mehreren Gewindesacklöcher können vorteilhaft in einer einzigen Maschinenaufspannung hergestellt werden.

Gemäß zumindest einer Ausführungsform weist das Geberrad mindestens 150 Zähne oder bevorzugt mindestens 200 oder sogar mindestens 300 Zähne auf. Auf diese Weise kann die Drehzahl oder Winkellage des Rotors vorteilhaft mit einer hohen Auflösung bestimmt werden. Die Verzahnung des Geberrads kann beispielsweise eine Rechteckverzahnung oder eine Evolventenverzahnung sein.

Gemäß zumindest einer Ausführungsform ist der Elektromotor ein wassergekühlter Elektromotor. Die Anordnung des Drehzahlgebers an dem antriebsseitigen Lagerschild ist bei einem wassergekühlten Elektromotor vorteilhaft, weil dieser keinen Lüfter aufweist, an dem ein Geberrad angebracht werden könnte.

Gemäß zumindest einer Ausführungsform weist der Elektromotor eine Leistung von mindestens 500 kW auf. Ein Drehmoment des Elektromotors beträgt vorzugsweise mindestens 9000 Nm. Der Elektromotor kann ein Hochleistungsmotor für einen Zug, insbesondere für einen Hochgeschwindigkeitszug mit einer möglichen Fahrgeschwindigkeit von mindestens 200 km/h oder sogar mindestens 300 km/h, sein. Bei einem solchen Hochleistungsmotor ist die Anordnung des Drehzahlgebers außerhalb des Motorgehäuses aufgrund der Wärmentwicklung vorteilhaft. Der Elektromotor kann insbesondere ein Synchronmotor sein.

Gemäß zumindest einer Ausführungsform weist der Elektromotor mindestens 4 Pole auf. Die Anzahl der Pole kann beispielsweise zwischen 4 und 24, bevorzugt 8, 12 oder 16 betragen. Bei einem solchen Elektromotor ist die Anordnung des Drehzahlgebers außerhalb des Gehäuses vorteilhaft, da der im Gehäuse zur Verfügung stehende Bauraum nur sehr klein ist.

Es wird weiterhin ein Schienenfahrzeug angegeben, das den zuvor beschriebenen Elektromotor aufweist. Sämtliche zuvor beschriebenen möglichen Ausgestaltungen des Elektromotors können bei dem in dem Schienenfahrzeug angeordneten Elektromotor verwirklicht sein und werden deshalb an dieser Stelle nicht nochmals beschrieben.

Gemäß zumindest einer Ausführungsform ist das Schienenfahrzeug ein Hochgeschwindigkeitszug mit einer Höchstgeschwindigkeit von mindestens 200 km/h oder sogar mindestens 300 km/h. Bei einem solchen Hochgeschwindigkeitszug werden Hochleistungs-Elektromotoren verwendet, bei denen die hierin vorgeschlagene Anordnung des Drehzahlgebers an dem Lagerschild und die Anordnung des Geberrads an der Kupplung besonders vorteilhaft ist.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert.

Es zeigen:
- Figur 1: eine schematische perspektivische Ansicht eines Elektromotors gemäß einem Ausführungsbeispiel,
- Figur 2: eine schematische Darstellung einer Schnittansicht durch einen Teil des Elektromotors gemäß Figur 1,
- Figur 3: eine schematische perspektivische Ansicht des Lagerschilds bei einem Ausführungsbeispiel des Elektromotors, und
- Figur 4: eine schematische Darstellung eines Schienenfahrzeug mit dem Elektromotor.

Gleiche oder gleich wirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

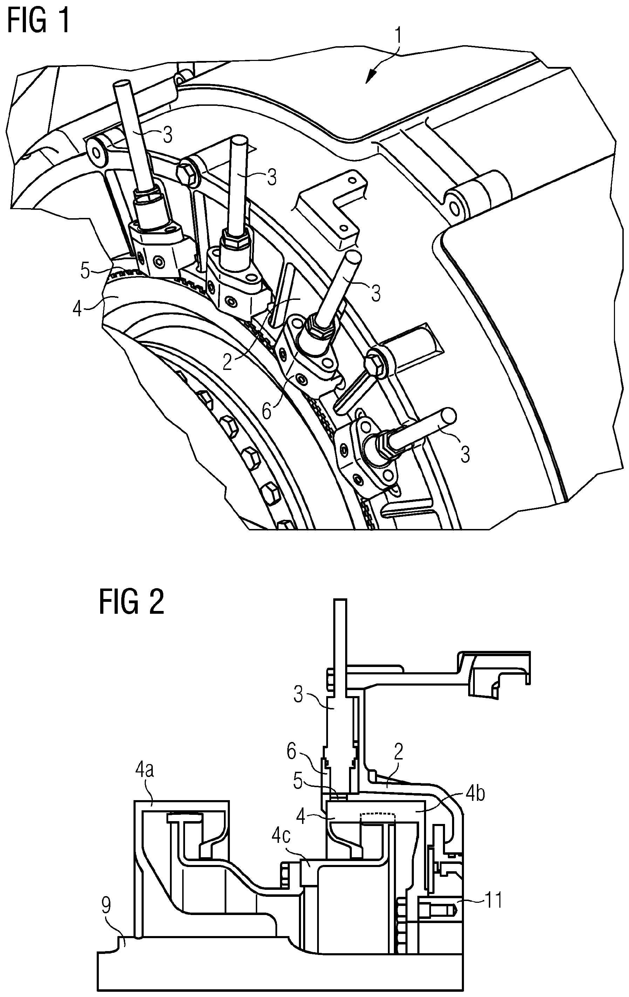

In den Figuren 1 und 2 ist ein Ausführungsbeispiel des Elektromotors 1 für ein Schienenfahrzeug in einer perspektivischen Ansicht und einer Schnittansicht dargestellt. Der Elektromotor 1 weist ein Gehäuse auf, das an einer Antriebsseite von einem Lagerschild 2 abgeschlossen wird. An der Antriebsseite ist der Elektromotor 1 durch eine Kupplung 4 mit einer Radsatzwelle 9 des Schienenfahrzeugs verbunden. Die Kupplung 4 kann insbesondere eine Bogenzahnkupplung sein.

Die Kupplung 4 dient insbesondere dazu, eine Rotorwelle 11 des Elektromotors 1 mit der Radsatzwelle 9 zu verbinden. Bei dem vorliegenden Beispiel ist die Kupplung 4 mehrteilig ausgeführt. Die Kupplung 4 weist einen radsatzseitigen Teil 4a auf, der mit der Radsatzwelle 9 verbunden ist. Weiterhin weist die Kupplung 4 einen motorseitigen Teil 4b auf, der mit einer Rotorwelle 11 des Elektromotors 1 verbunden ist. Zwischen dem motorseitigen Teil 4b und dem radsatzseitigen Teil 4a ist ein Mittelteil 4c der Kupplung 4 angeordnet. Im vorliegenden Beispiel ist die Kupplung 4 eine getriebelose Kupplung. Alternativ ist es möglich, dass zwischen der Rotorwelle 11 und der Radsatzwelle ein Getriebe angeordnet ist. Die Kupplung befindet sich in diesem Fall zwischen Motor und Getriebe.

Zur Bestimmung der Drehzahl weist der Elektromotor 1 einen oder mehrere Drehzahlgeber 3 auf. Der mindestens eine Drehzahlgeber 3 ist dazu eingerichtet, die Verzahnung eines Geberrads 5 abzutasten, das an der Kupplung 4 angebracht ist.

Das Geberrad 5 wird von dem Drehzahlgeber 3 vorzugsweise induktiv abgetastet. Alternativ wäre es möglich, dass der Drehzahlgeber 3 das Geberrad 5 optisch abtastet.

Das Geberrad 5 ist insbesondere auf dem motorseitigen Teil 4b der Kupplung 4 angeordnet, wobei der motorseitige Teil 4b der Kupplung mit der Rotorwelle 11 rotiert. Die Drehbewegung des motorseitigen Teils 4b der Kupplung stimmt also mit der Drehbewegung der Rotorwelle 11 überein. Ein Abtasten der Verzahnung des Geberrads 5 ermöglicht es, die Drehzahl und/oder die Winkellage des Rotors oder daraus ableitbare Größen zu bestimmen. Die Verzahnung, die das Geberrad 5 ausbildet, ist insbesondere auf einem äußeren Umfang des motorseitigen Teils 4b der Kupplung 4 angeordnet.

Wie in Figur 1 zu sehen, kann der Elektromotor 1 mehrere Drehzahlgeber 3 aufweisen, beispielsweise vier Drehzahlgeber 3. Die Drehzahlgeber 3 können verschiedene Funktionen aufweisen, beispielsweise können sie zur Antriebssteuerung, zur Bremssteuerung oder zur Stillstandserkennung vorgesehen sein.

Die Anordnung des Geberrads auf der Kupplung 4 hat den Vorteil, dass in axialer Richtung, d.h. in Richtung der Rotorwelle und Radsatzwelle 9, kein zusätzlicher Bauraum für das Geberrad 5 benötigt wird. Der Elektromotor 1 ist so besonders platzsparend ausgeführt.

Der Elektromotor 1 kann insbesondere ein wassergekühlter Motor sein, der keinen Lüfter aufweist. Die Anordnung des Geberrads 5 auf der Kupplung 4 ist in diesem Fall besonders vorteilhaft, da keine Möglichkeit zur Anordnung des Geberrads 5 an einem Lüfter besteht.

Die Verzahnung des Geberrads 5 kann beispielsweise eine Rechteckverzahnung oder eine Evolventenverzahnung sein. Das Modul der Verzahnung beträgt vorzugsweise mindestens 1,5 mm. Zur Erzielung einer guten Auflösung bei der Bestimmung der Drehzahl und/oder Winkellage des Rotors weist das Geberrad 5 vorzugsweise mindestens 150, mindestens 200 oder sogar mindestens 300 Zähne auf.

Der mindestens eine Drehzahlgeber 3 ist an einer Außenseite des antriebsseitigen Lagerschilds 2 montiert. Beispielsweise ist der Drehzahlgeber 3 mittels eines Adapters 6, der in ein Gewindesackloch des Lagerschilds 2 eingeschraubt ist, an das Lagerschild 2 montiert. Alternativ kann der Drehzahlgeber direkt an das Lagerschild geschraubt sein. Die Anordnung des mindestens einen Drehzahlgebers 3 an einer Außenseite des Lagerschilds 2 hat insbesondere den Vorteil, dass der Drehzahlgeber 3 vor hohen Temperaturen im Inneren des Motorgehäuses geschützt ist. Außerdem ist der Drehzahlgeber in der Einbauposition oben am Lagerschild gut vor Steinschlag geschützt. Auf diese Weise wird ein zuverlässiger und materialschonender Betrieb des Drehzahlgebers 3 ermöglicht. Der Elektromotor 1 kann insbesondere ein Hochleistungsmotor sein, der beispielsweise ein Drehmoment von mindestens 9000 Nm und/oder eine Leistung von mindestens 500 kW aufweist.

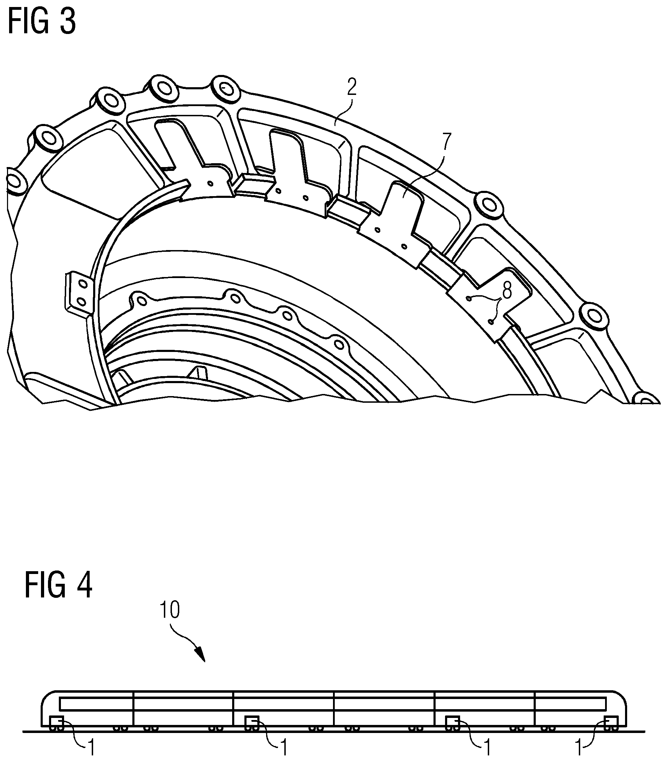

In Figur 3 ist eine perspektivische Ansicht des Lagerschilds 2 bei einem Ausführungsbeispiel des Elektromotors 1 zu sehen. Das Lagerschild 2 weist Anbauflächen 7 für einen oder mehrere Drehzahlgeber auf. Die Anbauflächen 7 können jeweils Gewindesacklöcher 8 aufweisen, in die beispielsweise Adapter eingeschraubt werden können, die die Drehzahlgeber aufnehmen können. Die mehreren Gewindesacklöcher 8 können vorteilhaft in einer einzigen Maschinenaufspannung hergestellt werden.

Das Anbringen der Drehzahlgeber an Gewindesacklöchern 8 in dem Lagerschild 2 hat den Vorteil, dass keine Durchgangsbohrungen in dem Lagerschild 2 erforderlich sind.

Der Elektromotor 1 ist insbesondere zum Antrieb eines Schienenfahrzeugs vorgesehen. Ein Schienenfahrzeug 10 ist schematisch in Figur 4 dargestellt. Das Schienenfahrzeug 10 kann einen oder vorzugsweise mehrere Elektromotoren 1 aufweisen, die jeweils eine der zuvor beschriebenen Ausgestaltungen aufweisen. Das Schienenfahrzeug 10 ist insbesondere ein Zug, bei dem der hierin beschriebene Elektromotor 1 in einen oder mehreren Wagen des Zuges eingebaut ist. Das Schienenfahrzeug 10 kann insbesondere ein Hochgeschwindigkeitszug sein, der beispielsweise eine Höchstgeschwindigkeit von mindestens 200 km/h oder sogar mindestens 300 km/h aufweist.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Elektromotor
- 2: Lagerschild
- 3: Drehzahlgeber
- 4: Kupplung
- 4a: radsatzseitiger Teil der Kupplung
- 4b: motorseitiger Teil der Kupplung
- 4c: Mittelteil der Kupplung
- 5: Geberrad
- 6: Adapter zur Drehzahlgebermontage
- 7: Anbaufläche
- 8: Gewindesacklöcher
- 9: Radsatzwelle
- 10: Schienenfahrzeug
- 11: Rotorwelle

## Patentansprüche

1. Elektromotor (1) für ein Schienenfahrzeug mit
- einem Drehzahlgeber (3),
- einem Geberrad (5) für den Drehzahlgeber (3),
- einem Lagerschild (2) und
- einer Kupplung (4), wobei
- der Drehzahlgeber (3) an dem Lagerschild (2) montiert ist, und
- das Geberrad (5) an der Kupplung montiert ist, sodass das Geberrad (5) in die Kupplung integriert ist.

2. Elektromotor nach Anspruch 1,
wobei das Lagerschild (2) das antriebsseitige Lagerschild ist.

3. Elektromotor nach einem der vorhergehenden Ansprüche, wobei der Drehzahlgeber (3) an einem Gewindesackloch (8) des Lagerschilds (2) befestigt ist.

4. Elektromotor nach einem der vorhergehenden Ansprüche, der mehrere an dem Lagerschild (2) montierte Drehzahlgeber (3) aufweist.

5. Elektromotor nach Anspruch 4,
wobei die mehreren Drehzahlgeber (3) jeweils an einem Gewindesackloch (8) des Lagerschilds (2) befestigt sind.

6. Elektromotor nach einem der vorhergehenden Ansprüche, wobei das Geberrad (5) mindestens 150 Zähne aufweist.

7. Elektromotor nach einem der vorhergehenden Ansprüche, wobei der Elektromotor (1) ein wassergekühlter Motor ist.

8. Elektromotor nach einem der vorhergehenden Ansprüche, wobei der Elektromotor (1) eine Leistung von mindestens 500 kW aufweist.

9. Elektromotor nach einem der vorhergehenden Ansprüche, wobei der Elektromotor (1) ein Drehmoment von mindestens 9000 Nm aufweist.

10. Schienenfahrzeug (10),
das mindestens einen Elektromotor (1) nach einem der vorhergehenden Ansprüche umfasst.

11. Schienenfahrzeug nach Anspruch 10,
wobei das Schienenfahrzeug (10) ein Hochgeschwindigkeitszug mit einer Höchstgeschwindigkeit von mindestens 200 km/h ist.

## Claims

1. Electric motor (1) for a rail vehicle having
- a rotational speed sensor (3),
- a sensor wheel (5) for the rotational speed sensor (3),
- an end shield (2) and
- a coupling (4), wherein
- the rotational speed sensor (3) is mounted on the end shield (2), and
- the sensor wheel (5) is mounted directly on the coupling.

2. Electric motor according to claim 1,
wherein the end shield (2) is the drive-side end shield.

3. Electric motor according to one of the preceding claims, wherein the rotational speed sensor (3) is fastened to a threaded blind hole (8) of the end shield (2).

4. Electric motor according to one of the preceding claims, which has a plurality of rotational speed sensors (3) mounted on the end shield (2).

5. Electric motor according to claim 4,
wherein the plurality of rotational speed sensors (3) are each fastened to a threaded blind hole (8) of the end shield (2).

6. Electric motor according to one of the preceding claims, wherein the sensor wheel (5) has at least 150 teeth.

7. Electric motor according to one of the preceding claims, wherein the electric motor (1) is a water-cooled motor.

8. Electric motor according to one of the preceding claims, wherein the electric motor (1) has an output of at least 500 kW.

9. Electric motor according to one of the preceding claims, wherein the electric motor (1) has a torque of at least 9000 Nm.

10. Rail vehicle (10),
comprising at least one electric motor (1) according to one of the preceding claims.

11. Rail vehicle according to claim 10,
wherein the rail vehicle (10) is a high-speed train having a maximum speed of at least 200 km/h.

## Revendications

1. Moteur (1) électrique pour un véhicule ferroviaire, comportant
- un indicateur (3) de régime,
- une roue (5) d'indicateur pour l'indicateur (3) de régime,
- un flasque (2) et
- un accouplement (4),
- l'indicateur (3) de régime étant monté sur le flasque (2), et
- la roue (5) d'indicateur étant montée sur l'accouplement, de telle manière que la roue (5) d'indicateur est intégrée dans l'accouplement.

2. Moteur électrique suivant la revendication 1,
le flasque (2) étant un flasque situé côté entraînement.

3. Moteur électrique suivant l'une des revendications précédentes,
l'indicateur (3) de régime étant fixé à un trou (8) borgne fileté du flasque (2).

4. Moteur électrique suivant l'une des revendications précédentes,
qui comporte plusieurs indicateurs (3) de régime montés sur le flasque (2).

5. Moteur électrique suivant la revendication 4,
les plusieurs indicateurs (3) de régime étant situés chacun sur un trou (8) borgne fileté du flasque (2).

6. Moteur électrique suivant l'une des revendications précédentes,
la roue (5) d'indicateur comportant au moins 150 dents.

7. Moteur électrique suivant l'une des revendications précédentes,
le moteur (1) électrique étant un moteur à refroidissement par eau.

8. Moteur électrique suivant l'une des revendications précédentes,
le moteur (1) électrique ayant une puissance d'au moins 500 kW.

9. Moteur électrique suivant l'une des revendications précédentes,
le moteur (1) électrique ayant un couple d'au moins 9000 Nm.

10. Véhicule (10) ferroviaire,
qui comprend au moins un moteur (1) électrique suivant l'une des revendications précédentes.

11. Véhicule ferroviaire suivant la revendication 10,
le véhicule (10) ferroviaire étant un train à grande vitesse ayant une vitesse maximum d'au moins 200 km/h.
